(19) Europäisches Patentamt
European Patent Office
Office européen des brevets

(11) **EP 4 439 001 A1**

(12) **DEMANDE DE BREVET EUROPEEN**

(43) Date de publication:
02.10.2024 Bulletin 2024/40

(21) Numéro de dépôt: 24165906.9

(22) Date de dépôt: 25.03.2024

(51) Classification Internationale des Brevets (IPC):
**G01B 7/02** (2006.01)        **G01D 5/20** (2006.01)
**G01G 7/02** (2006.01)

(52) Classification Coopérative des Brevets (CPC):
**G01D 5/2046; G01G 7/02**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: 31.03.2023 FR 2303184

(71) Demandeur: **COMMISSARIAT À L'ÉNERGIE ATOMIQUE ET AUX ÉNERGIES ALTERNATIVES**
**75015 Paris (FR)**

(72) Inventeurs:
• **NIKOLOVSKI, Jean-Pierre**
**13108 Saint-Paul-lez-Durance (FR)**
• **ABOULKASSIMI, Driss**
**13108 Saint-Paul-lez-Durance (FR)**

(74) Mandataire: **Atout PI Laplace**
**Immeuble Up On**
**25 Boulevard Romain Rolland**
**CS 40072**
**75685 Paris Cedex 14 (FR)**

(54) **CAPTEUR INDUCTIF A HAUTE RESOLUTION**

(57) L'invention a pour objet Capteur inductif comprenant une partie fixe et une partie mobile. La partie mobile comprenant un corps d'épreuve mobile ou déformable, et un élément de couplage magnétique mécaniquement solidaire du corps d'épreuve. La partie fixe comprenant : un générateur de tension et un transformateur à bobines comprenant une inductance d'émission montée en parallèle avec le générateur et une inductance de réception. L'élément de couplage magnétique étant séparé d'une extrémité de l'inductance d'émission par une distance de séparation. La partie fixe comprend une chaîne d'acquisition connectée à l'inductance de réception et configurée pour générer un signal de mesure de la variation de la distance. Le signal de mesure correspondant à une mesure de la variation de la fréquence ou de l'amplitude de la tension aux bornes de l'inductance de réception.

FIG 1a

EP 4 439 001 A1

**Description**

**Champ d'application**

L'invention concerne le domaine de détection de proximité et de déplacement ou de déformation pour réaliser des capteurs. Plus particulièrement, l'invention concerne un capteur de déplacement d'un corps d'épreuve mobile ou déformable couplé à un flux inductif. Le champ d'application de l'invention peut couvrir les dispositifs de pesée à grande dynamique appliqués pour les laboratoires (1mg à 200g), les personnes (1g à 200kg) ou les grands travaux (1kg à 200 tonnes).

**Problème soulevé**

Dans les domaines des dispositifs de mesure, la sensibilité est un paramètre crucial, notamment dans les appareils de pesée ou les capteurs de pression. La sensibilité d'un appareil de mesure représente sa capacité à détecter de petites variations dans la mesure. Plus l'appareil est sensible, plus il est capable de mesurer avec précision les variations de la grandeur mesurée. Plus particulièrement, dans le cas des appareils de pesée, une sensibilité accrue permet de mesurer des quantités plus petites et d'obtenir des résultats plus précis. Cela peut être particulièrement important dans des domaines tels que la pharmacologie, la recherche en laboratoire ou l'industrie agroalimentaire, où des mesures précises et fiables sont essentielles pour assurer la qualité et la sécurité des produits ou des résultats de recherches scientifiques. Par conséquent, une sensibilité adéquate est essentielle pour garantir l'exactitude des résultats et pour répondre aux normes de qualité en vigueur.

De plus, la plage dynamique est un autre paramètre important dans les appareils de mesure généralement, et dans les appareils de pesée ou de mesure de pression particulièrement. On entend par « plage dynamique » l'intervalle comprenant les valeurs mesurables par l'appareil de mesure, allant de la plus petite mesure détectable à la plus grande. Une plage dynamique élevée signifie que l'appareil peut mesurer des quantités très faibles ainsi que des quantités très élevées. Plus particulièrement, Dans le cas des appareils de pesée, une plage dynamique plus large peut être particulièrement utile dans les situations où des objets de différentes masses doivent être pesés. Par exemple, une balance avec une plage dynamique plus large peut être utilisée pour peser de petits échantillons dans un laboratoire de recherche, ainsi que pour peser de plus grandes quantités de matières premières dans l'industrie. En ayant une plage dynamique plus large, les utilisateurs peuvent obtenir des résultats précis et fiables pour un large éventail de mesures, ce qui est essentiel pour de nombreuses applications.

Dans ce contexte, l'exploitation de la déformation d'un corps d'épreuve présente une solution adaptée pour la mesure d'une masse ou d'une force appliquée. Cette méthode utilise un corps d'épreuve élastique, qui est un élément de structure conçu pour subir une déformation en réponse à une force appliquée. La déformation provoque une variation de caractéristiques physiques du corps d'épreuve qui peut être convertie en des signaux électriques. Par exemple, la déformation relative d'un corps d'épreuve comprenant des jauges piézorésistives de déformation engendre une variation relative de la résistance des jauges de contraintes. La mesure de cette variation de la résistance, nécessite de coller les jauges sur le corps d'épreuve et l'établissement d'une connexion électrique physique entre le corps d'épreuve et un circuit électronique. La sensibilité aux chocs mécaniques et la connectique diminuent considérablement la robustesse du capteur car une partie de l'électronique de mesure subit les forces mécaniques appliquées lors de la mesure. En ingénierie, la robustesse d'un système se définit comme la stabilité des performances malgré des conditions externes présentant des larges variations susceptibles de réduire la fiabilité du système. De plus, l'implémentation totale ou partielle de l'électronique de mesure sur le corps d'épreuve limite la plage dynamique du capteur pour éviter l'endommagement de l'électronique de mesure.

Ainsi, l'objectif est de développer un capteur de mesure sur la base d'un corps d'épreuve déformable et/ou mobile avec une haute sensibilité, une large plage de dynamique tout en assurant sa robustesse mécanique et électronique permettant d'améliorer la fiabilité et la durée de vie du capteur.

**Art antérieur/restrictions de l'état de l'art**

La demande de brevet internationale WO98/19133 décrit un dispositif de contrôle dimensionnel par génération et détection locale et sélective d'ultrasons. La solution se base sur le couplage du champ ultrasonore entre la tête de lecture et la surface de l'objet sondé. L'inconvénient de la solution décrite est que le dispositif de mesure présente une forte dépendance en température de l'ordre de 1700ppm/°C ce qui nécessite une compensation de la dérive en température du signal de mesure au moyen d'un capteur de température haute résolution.

La demande de brevet DE 1 0048435A1 décrit un capteur inductif de déplacement latéral d'un objet mobile par rapport à un objet fixe. Le dispositif détecte les variations en translation en maintenant une distance fixe entre une surface conductrice et un circuit sous forme de serpentin. Bien qu'il soit efficace pour détecter le passage d'objets, cette configuration n'offre pas une grande dynamique dans une direction perpendiculaire au plan du détecteur, ni une résolution élevée perpendiculairement au plan du serpentin.

**Réponse au problème et apport de solution**

Pour pallier les limitations des solutions existantes en ce qui concerne la sensibilité, la plage de dynamique et la robustesse, l'invention propose un capteur qui exploite la variation de la perméabilité magnétique relative d'une impédance inductive couplée directement ou indirectement avec un élément de couplage magnétique solidaire avec un corps d'épreuve. L'invention se base sur la variation d'une réponse fréquentielle de ladite impédance inductive en réponse à une stimulation impulsionnelle et/ou la variation d'une amplitude mesurée en réponse à un signal en rampe de tension. L'invention permet une mesure sans contact entre le circuit électronique de traitement de signal et le corps d'épreuve qui subit des contraintes mécaniques. De plus, le dispositif selon l'invention présente une faible dépendance à la température, ce qui améliore sa stabilité par rapport aux solutions de l'état de l'art.

**Résumé /Revendications**

L'invention a pour objet un capteur inductif comprenant une partie fixe et une partie mobile ; la partie mobile comprenant :

- un corps d'épreuve mobile ou déformable, selon une première direction,
- et un élément de couplage magnétique mécaniquement solidaire du corps d'épreuve ;

la partie fixe comprenant :

- un générateur de tension configuré pour générer un signal d'excitation ;
- un transformateur à bobines comprenant une inductance d'émission montée en parallèle avec le générateur et une inductance de réception ; l'axe de l'inductance d'émission et l'axe de l'inductance de réception étant orientés selon la première direction ; l'élément de couplage magnétique étant placé par rapport au transformateur à bobines de manière à coupler magnétiquement l'inductance d'émission et l'inductance de réception ; l'élément de couplage magnétique étant séparé d'une extrémité de l'inductance d'émission par une distance de séparation;
- une chaîne d'acquisition connectée à l'inductance de réception et configurée pour générer un signal de mesure de la variation de la distance suite à un déplacement ou à la déformation du corps d'épreuve ; le signal de mesure correspondant à une mesure de la variation de la fréquence ou de l'amplitude de la tension aux bornes de l'inductance de réception.

Selon un aspect particulier de l'invention, la chaîne d'acquisition comprend un convertisseur analogique-numérique pour convertir la tension aux bornes de l'inductance de réception en un premier signal numérique.
Selon un aspect particulier de l'invention, la chaîne d'acquisition comprend un calculateur configuré pour :

- extraire la fréquence de résonance de la tension aux bornes de l'inductance de réception à partir du premier signal numérique .
- calculer l'écart entre la fréquence de résonance extraite et une fréquence de référence prédéterminée.

Selon un aspect particulier de l'invention, le signal d'excitation est une impulsion rectangulaire.
Selon un aspect particulier de l'invention, la partie fixe comprend en outre un élément capacitif et un élément résistif montés en série avec l'inductance d'émission de manière à réaliser un circuit RLC alimenté par le générateur de tension.
Selon un aspect particulier de l'invention, la chaîne d'acquisition comprend un calculateur configuré pour :

- réaliser un échantillonnage du premier signal numérique afin d'extraire l'amplitude de la tension aux bornes de l'inductance de réception ;
- calculer l'écart entre l'amplitude extraite et une amplitude de référence prédéterminée.

Selon un aspect particulier de l'invention, le signal d'excitation est une rampe de tension.
Selon un aspect particulier de l'invention, la chaîne d'acquisition comprend un circuit amplificateur monté en amont du convertisseur analogique-numérique pour amplifier la tension aux bornes de l'inductance de réception.
Selon un aspect particulier de l'invention, l'élément de couplage magnétique est un objet en un matériau ferrite sous forme de $\pi$ ou sous forme de demi-tore ou sous forme de tige ou sous forme de feuille.

Selon un aspect particulier de l'invention, le matériau ferrite est choisi tel que la sensibilité thermique de la perméabilité magnétique relative dudit matériau est inférieure à 1%/°C.

Selon un aspect particulier de l'invention, l'inductance d'émission et l'inductance de réception sont réalisées par des pistes métalliques coplanaires déposées sur un circuit imprimé.

Selon un aspect particulier de l'invention, chacune de l'inductance d'émission et de l'inductance de réception est réalisée par une bobine enroulée autour d'une tige solide.

Selon un aspect particulier de l'invention, l'inductance d'émission est disposée à côté de l'inductance de réception ou superposée sur l'inductance de réception .

Selon un aspect particulier de l'invention, la partie mobile comprend N éléments de couplage magnétique mécaniquement solidaires au corps d'épreuve alignés selon une rangée avec N un entier strictement supérieur à 1 ; et dans lequel la partie fixe comprend N-1 éléments de couplage magnétique intermédiaires disposés entre l'inductance d'émission et l'inductance de réception .

L'invention a également pour objet un appareil de mesure de poids ou de pression comprenant un capteur inductif selon l'invention.

## Description Détaillée

D'autres caractéristiques et avantages de la présente invention apparaîtront mieux à la lecture de la description qui suit en relation aux dessins annexés suivants.

La figure 1a illustre le schéma électrique du capteur inductif selon un premier mode de réalisation de l'invention.

La figure 1b illustre une analyse spectrale de la tension aux bornes de l'inductance de réception du capteur inductif selon le premier mode de réalisation de l'invention.

La figure 1c illustre le schéma électrique du capteur inductif selon un deuxième mode de réalisation de l'invention.

La figure 2a illustre le schéma électrique du capteur inductif selon un troisième mode de réalisation de l'invention.

La figure 2b illustre un exemple d'évolution temporelle des signaux électriques du capteur inductif selon le troisième mode de réalisation de l'invention.

La figure 3 illustre une vue en coupe d'un premier mode de réalisation de la partie inductive du capteur selon l'invention.

La figure 4 illustre une vue en coupe d'un deuxième mode de réalisation de la partie inductive du capteur selon l'invention.

La figure 5a illustre une vue en coupe d'un troisième mode de réalisation de la partie inductive du capteur selon l'invention.

La figure 5b illustre une vue de dessus partielle du troisième mode de réalisation de la partie inductive du capteur selon l'invention.

La figure 6 illustre une vue en coupe d'un quatrième mode de réalisation de la partie inductive du capteur selon l'invention.

La figure 7 illustre une vue en coupe d'un cinquième mode de réalisation de la partie inductive du capteur selon l'invention.

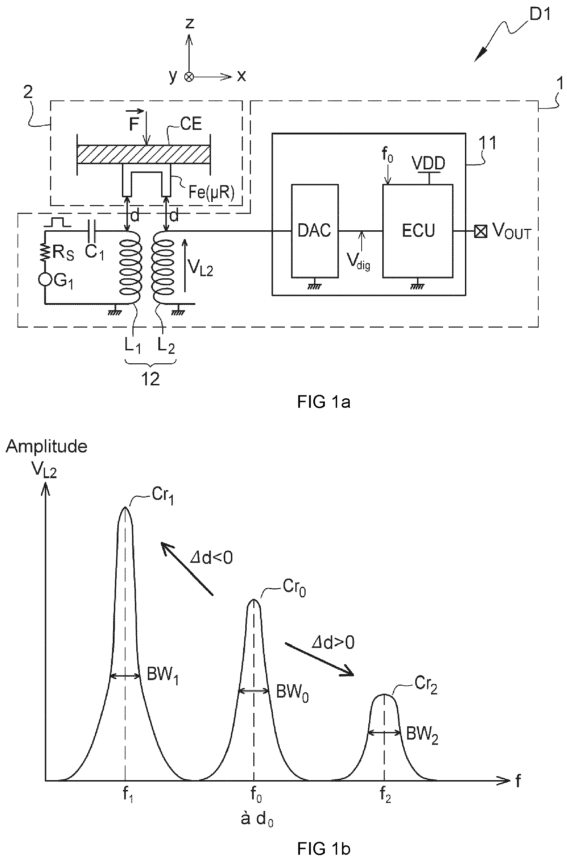

La figure 1a illustre le schéma électrique du capteur inductif D1 selon un premier mode de réalisation de l'invention. Le capteur inductif D1 comprend une partie fixe 1 et une partie mobile 2 selon une première direction Z dans un repère orthonormé (X,Y,Z).

La partie mobile 2 comprend un corps d'épreuve CE et un élément de couplage magnétique Fe mécaniquement solidaire au corps d'épreuve CE.

Le corps d'épreuve CE est un pont ou une plaque orthogonale à la première direction Z. Le corps d'épreuve CE peut être mobile ou élastiquement déformable selon la première direction Z suite à l'application d'une force **F** selon ladite première direction. La force appliquée **F** correspond par exemple au poids d'un objet physique reposant sur le corps d'épreuve CE ou à une pression exercée sur sa surface supérieure. Dans le cas d'un corps d'épreuve CE mobile par translation selon la première direction Z, des moyens élastiques sont rattachés au corps d'épreuve CE afin de le remettre à sa position initiale en l'absence d'une force appliquée **F.**

L'élément de couplage magnétique Fe mécaniquement solidaire au corps d'épreuve CE de manière à suivre son déplacement ou sa déformation selon la première direction Z. L'élément de couplage magnétique Fe est un objet réalisé en un matériau ferromagnétique sous forme de $\pi$ ou sous forme de demi-tore ou sous forme de tige ou sous forme de feuille. À titre d'exemple, le matériau ferromagnétique est une ferrite réalisée en alliage de Ni-Zn ou Mn-Zn ou Co-Ni-Zn.

Avantageusement, le matériau ferromagnétique présente une sensibilité thermique de ladite perméabilité magnétique relative $\mu r$ inférieure à 1%/°C. De plus, le matériau ferromagnétique présente une bande passante élevée allant jusqu'à 50MHz.

Avantageusement, à l'exception du cas de la feuille, il est possible d'enrouler des spires métalliques autour de l'élément de couplage magnétique Fe afin d'améliorer les capacités de couplage magnétique de l'élément de couplage magnétique Fe.

Dans l'exemple illustré, l'élément de couplage magnétique Fe sous forme de $\pi$, comprend une base et deux protubérances parallèles qui s'étendent à partir de ladite base selon la première direction Z. Les protubérances peuvent être des tiges droites, ou de forme conique. La base est fixée sur une surface, de préférence la surface inférieure, du corps d'épreuve CE et les protubérances s'étendent orthogonalement à ladite surface vers le bas.

La partie fixe 1 comprend un générateur de tension G1, un transformateur à bobines 12 comprenant une inductance d'émission $L_1$ monté en parallèle avec le générateur G1 et une inductance de réception $L_2$, et une chaîne d'acquisition 11 connecté à l'inductance de réception $L_2$.

Le générateur G1 est configuré pour générer un signal d'excitation $V_{in}$ sous forme d'impulsion électrique et présente une résistance de sortie Rs inférieure à $0.5\Omega$. La partie fixe 1 comprend en outre un élément capacitif C1 montée en série avec la résistance de sortie Rs et l'inductance d'émission $L_1$. L'élément capacitif $C_1$, la résistance de sortie Rs et l'inductance d'émission $L_1$ forment ensemble un circuit RLC excité par l'impulsion électrique $V_{in}$ générée par le générateur G1. Le dimensionnement de l'élément capacitif C1 et l'inductance d'émission $L_1$ est choisi de manière à avoir un facteur d'amortissement $\zeta$ inférieur à 0,7 de manière à obtenir un régime oscillatoire amorti suite à l'application de l'impulsion électrique $V_{in}$.

L'inductance de réception $L_2$ est placée à proximité de l'inductance d'émission $L_1$ pour permettre un couplage magnétique entre les deux inductances et ainsi obtenir un fonctionnement en transformateur d'énergie 12. L'axe de l'inductance d'émission $L_1$ et l'axe de l'inductance de réception $L_2$ sont orientés selon la première direction Z. Ainsi, les variations de la tension aux bornes de l'inductance d'émission $L_1$ sont reproduites aux bornes de l'inductance de réception $L_2$. L'état initial du capteur inductif D1 correspond à l'absence d'une force **F** selon Z appliquée sur le corps d'épreuve CE. À l'état initial du capteur D1, la première protubérance de l'élément de couplage magnétique Fe en $\pi$ est placée à une distance initiale prédéterminée $d=d_0$ par rapport à l'extrémité supérieure de l'inductance d'émission $L_1$.

Avantageusement, à l'état initial du capteur D1, la seconde protubérance de l'élément de couplage magnétique Fe en $\pi$ est placée à ladite distance prédéterminée $d=d_0$ par rapport à l'extrémité supérieure de l'inductance de réception $L_2$. Cette configuration présente l'avantage de dupliquer deux fois la dépendance du flux magnétique produit en sortie axiale de l'inductance d'émission $L_1$ avec la variation de la distance d : une première dépendance caractéristique de la décroissance axiale du flux magnétique produit par l'inductance d'émission $L_1$ lorsque l'on éloigne ou rapproche l'élément de couplage magnétique et une seconde dépendance qui caractérise le transfert du champ magnétique de l'élément de couplage magnétique vers l'inductance de réception $L_2$.

L'inductance d'émission $L_1$, l'inductance de réception $L_2$ et l'élément de couplage magnétique Fe forment un ensemble dénommé « partie inductive » du capteur D1. La « partie inductive » présente une valeur d'inductance équivalente $L_{eq}$ .

La réponse à une excitation par une impulsion rectangulaire $V_{in}$ du circuit $R_sL_{eq}C_1$ est une oscillation pseudopériodique amortie. La réponse oscillatoire est aussi reproduite aux bornes de l'inductance de réception $L_2$ par couplage magnétique. La fréquence de résonance f observée aux bornes de l'inductance de réception $L_2$ est déterminée par l'expression suivante :

$$f = \frac{1}{2\pi\sqrt{L_{eq}C_1}} \simeq \frac{1}{2\pi\sqrt{\frac{4\pi\mu_{r,eq}\mu_0 N^2 R^2 C_1}{l+0,9R}}}$$

avec N le nombre de spires jointives de l'inductance d'émission $L_1$, R le rayon des spires de l'inductance d'émission $L_1$,

l la longueur des spires jointives de l'inductance d'émission $L_1$, $\mu_0$ la perméabilité magnétique du vide et $\mu_{r,eq}$ la perméabilité magnétique relative équivalente de la partie inductive fonction de la perméabilité magnétique relative $\mu r$ de l'élément magnétique de couplage et de la distance d séparant l'élément magnétique de couplage Fe de l'inductance d'émission $L_1$.

Parmi les paramètres précités, la distance d est le seul paramètre variable suite à l'application d'une force F sur le corps d'épreuve CE. L'application de la force **F** selon la direction Z induit la translation ou la déformation du corps d'épreuve CE selon la direction Z. Cela induit une variation de la distance d séparant l'élément de couplage magnétique Fe de l'inductance d'émission $L_1$. Cela induit une variation de $\mu_{r,eq}$ la perméabilité magnétique relative équivalente de la partie inductive. Cela induit une variation de la fréquence de résonance de la tension $V_{L2}$ observée aux bornes de l'inductance de réception $L_2$ en réponse à l'impulsion rectangulaire électrique $V_{in}$. Cette chaîne de dépendance permet ainsi de convertir l'amplitude de la force **F** appliquée en un paramètre mesurable, à savoir la variation de la fréquence de résonance f.

La chaîne d'acquisition 11 comprend un convertisseur analogique-numérique DAC pour convertir la tension $V_{L2}$ (signal analogique) aux bornes de l'inductance de réception $L_2$ en un premier signal numérique $V_{dig}$. Le premier signal numérique $V_{dig}$ correspond ainsi à un signal oscillatoire numérisé avec une fréquence de résonance f égale à celle de la tension $V_{L2}$. Le convertisseur analogique-numérique DAC est caractérisé par une fréquence d'échantillonnage $f_{DAC}$ prédéterminée. Les valeurs de la capacité $C_1$ et de l'inductance d'émission $L_1$ sont choisies de manière à avoir toujours une fréquence de résonance f inférieure à la moitié de la fréquence d'échantillonnage $f_{DAC}$ du convertisseur analogique-numérique DAC. Par exemple, la fréquence d'échantillonnage $f_{DAC}$ est égale à 12MHz ainsi la fréquence de résonance f est toujours inférieure à 6MHz lors du fonctionnement du capteur D1.

La chaîne d'acquisition 11 comprend en outre un calculateur ECU configuré pour :

- réaliser une analyse de fourrier du premier signal numérique $V_{dig}$ afin d'extraire la fréquence de résonance $f_1$ de la tension $V_{L2}$ aux bornes de l'inductance de réception $L_2$ en réponse à l'impulsion rectangulaire $V_{in}$ avec une force **F** non-nulle et $d=d_1 \neq d_0$ .

- calculer l'écart $\Delta f$ entre la fréquence de résonance $f_1$ extraite et une fréquence de référence $f_0$ prédéterminée.

La fréquence de référence $f_0$ est mesurée préalablement dans une étape de tarage correspondant aux conditions suivante : **F**$=F_0$ et $d=d_0$. La fréquence de référence $f_0$ est ensuite stockée comme donnée numérique dans la mémoire du calculateur ECU. Dans l'opération de tarage, il est possible de se baser sur une force appliquée de référence **F**$=F_0$ non nulle.

Le capteur génère ainsi un signal de mesure $V_{out}$ de la variation de la distance $\Delta d$ suite à un déplacement ou la déformation du corps d'épreuve CE. Le signal de mesure $V_{out}$ correspondant à une mesure de la variation de la fréquence $\Delta f = f_1 - f_0$.

Avantageusement, le matériau ferromagnétique de l'élément de couplage magnétique Fe présente une perméabilité magnétique relative initiale $\mu r$ comprise entre 1 et 1500. Cela permet d'augmenter l'effet de la variation de la distance séparant l'élément de couplage magnétique Fe sur la variation de l'inductance équivalente $L_{eq}$ avec une plage de variation comprise entre 10% à 400% et plus particulièrement autour de 50% à 150%.

Avantageusement, les protubérances de l'élément de couplage magnétique Fe présentent un diamètre inférieur à celui des inductances $L_1$ et $L_2$. Leur profil peut être conique. Ainsi, l'insertion des protubérances de l'élément de couplage magnétique Fe dans chacune des inductances $L_1$ et $L_2$ permet d'augmenter considérablement la plage de dynamique du capteur D1. De plus, cela permet de maximiser le couplage magnétique entre les inductances $L_1$ et $L_2$ et ainsi d'augmenter la sensibilité du capteur inductif selon l'invention.

Dans la solution selon l'invention, la grandeur physique variable suite à l'application d'une force est une distance de séparation. La partie fixe 1 correspond à la circuiterie électronique de mesure qui n'est pas implémentée directement sur le corps d'épreuve CE. Cela permet d'éviter d'appliquer des contraintes mécaniques sur la circuiterie électronique de mesure lors de l'utilisation du capteur D1. Cela permet d'éviter la dégradation des composants et connexions électriques et ainsi permet d'améliorer la robustesse du capteur D1 par rapport aux solutions de l'état de l'art.

La figure 1b illustre une analyse spectrale de la tension $V_{L2}$ aux bornes de l'inductance de réception $L_2$ du capteur inductif D1 selon le premier mode de réalisation de l'invention. La courbe Cr0 correspond à l'état initial ($d=d_0$) ; la courbe Cr1 correspond à l'approchement de l'élément de couplage magnétique Fe vers l'inductance d'excitation $L_1$ ($d=d_1<d_0$) .; la courbe Cr2 correspond à l'éloignement de l'élément de couplage magnétique Fe de l'inductance d'excitation $L_1$ ($d=d_2>d_0$).

Lorsque l'élément de couplage magnétique Fe s'approche des extrémités des inductances $L_1$ et $L_2$, la distance d diminue. Cela induit une augmentation de la perméabilité magnétique relative équivalente $\mu_{r,eq}$ de la partie inductive ce qui se traduit par un accroissement de l'inductance équivalente $L_{eq}$ et simultanément un couplage magnétique plus fort entre l'inductance d'émission $L_1$ et l'inductance de réception $L_2$. Cet effet est amplifié si les pertes magnétiques

**6**

dans l'élément de couplage magnétique Fe sont faibles, ce qui est le cas d'une ferrite en forme de $\Pi$ ou demi-tore. Avantageusement, le nombre de spires de l'inductance de réception $L_2$ est supérieur, de préférence 2 à 5 fois, au nombre de spires de l'inductance d'émission $L_1$ de manière à améliorer la sensibilité du capteur inductif selon l'invention.

On obtient alors trois résultats simultanément : une diminution de la fréquence de résonance mesurée $\Delta f = f_1 - f_0 > 0$ ; une augmentation de l'amplitude du pic de résonance car le couplage magnétique est amélioré ; et une augmentation du facteur de qualité Q de la partie inductive car la largeur du pic de résonance est réduite (BW1-BW0<0). Inversement, lorsque l'élément de couplage magnétique Fe s'éloigne des extrémités des inductances $L_1$ et $L_2$, la distance d augmente. Cela induit une diminution de la perméabilité magnétique relative équivalente $\mu_{r,eq}$ de la partie inductive ; ce qui réduit la valeur de l'inductance équivalente $L_{eq}$ et simultanément se traduit par un couplage magnétique plus faible entre l'inductance d'émission $L_1$ et l'inductance de réception $L_2$. On obtient alors trois résultats simultanément : une augmentation de la fréquence de résonance mesurée $\Delta f = f_2 - f_0 > 0$ ; une diminution de l'amplitude du pic de résonance car le couplage magnétique est réduit ; et une diminution du facteur de qualité Q de la partie inductive car la largeur du pic de résonance est augmentée (BW2-BW0<0).

On obtient ainsi, un capteur inductif D1 ayant des performances améliorées en terme de sensibilité, de plage de dynamique et de robustesse. Par exemple, la fréquence de résonance peut varier de 50%, avec une plage comprise entre de préférence 2 et 6 MHz avec une course maximale de 3 mm selon la première direction Z, de préférence inférieure à 1 mm. La résolution en fréquence est d'environ 2,5 ppm (partie par million) avec une cadence de mesure de 5 Hz, tandis que la résolution en variation de la distance d est d'environ 10 nm.

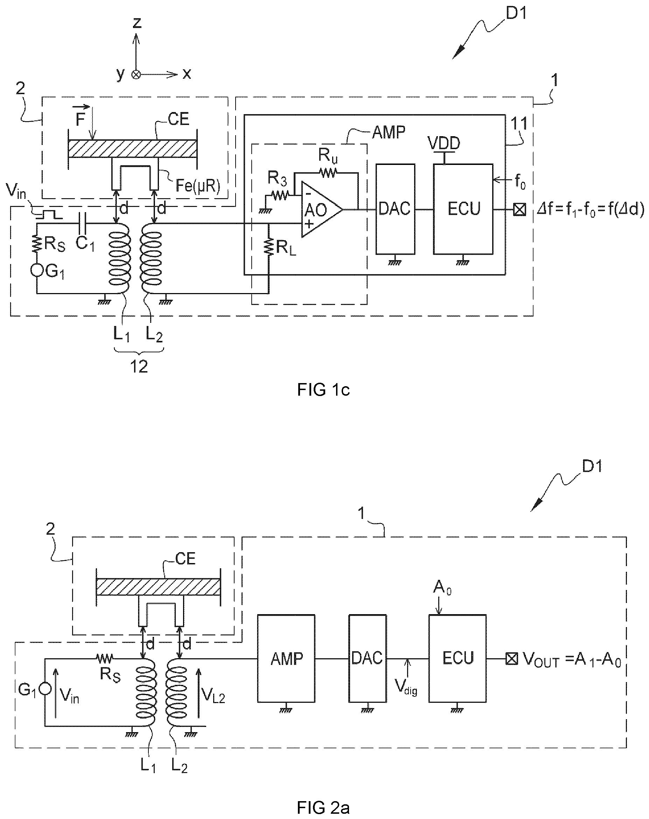

La figure 1c illustre le schéma électrique du capteur inductif D1 selon un deuxième mode de réalisation de l'invention. Les caractéristiques structurelles et fonctionnelles décrites pour le premier mode de réalisation restent valables pour le deuxième mode de réalisation. Dans le mode illustré, la partie fixe 1 comprend en outre un circuit amplificateur AMP monté en amont du convertisseur analogique-numérique DAC pour amplifier la tension $V_{L2}$ aux bornes de l'inductance de réception $L_2$. Cela permet d'améliorer la sensibilité du capteur inductif D1. À titre d'exemple non limitatif, le circuit amplificateur est réalisé par un amplificateur opérationnel AO large bande configuré en montage non inverseur avec un gain d'amplification égal à $1 + \dfrac{R4}{R3}$ compris entre 2 et 11. Le circuit d'amplification AMP présente une impédance d'entrée $R_L$ supérieure ou égale $10^5$ fois la résistance résiduelle des spires de l'inductance de réception $L_2$.

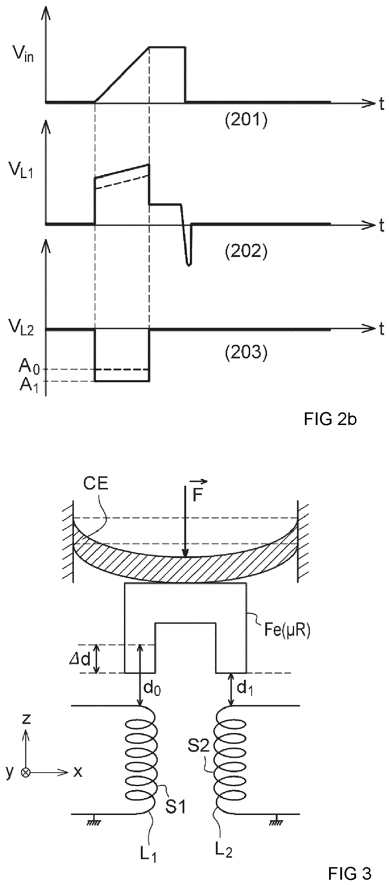

La figure 2a illustre le schéma électrique du capteur inductif D1 selon un troisième mode de réalisation de l'invention. Dans ce mode de réalisation, la quantification de la variation de la distance d se fait par une mesure d'amplitude et non de fréquence. Le générateur G1 est configuré pour générer un signal d'excitation $V_{in}$ sous forme de rampe de tension. La rampe de tension $V_{in}$ crée un flux magnétique transitoire par l'inductance d'émission $L_1$ avec une variation temporelle de courant $\dfrac{di}{dt}$ constante. La figure 2b illustre un exemple d'évolution temporelle des signaux électriques du capteur inductif D1 selon le troisième mode de réalisation de l'invention. La rampe de tension du signal d'excitation $V_{in}$ est reproduite aux bornes de l'inductance d'émission $L_1$ à cause de la résistance résiduelle de ladite inductance d'émission. On illustre sur le diagramme (202) en continu une rampe de tension $V_{L1}$ obtenue pour une distance $d_1$ inférieure à la distance initiale $d_0$. On illustre sur le diagramme (202) en pointillé une rampe de tension $V_{L1}$ obtenue pour la distance $d_0$ correspondant à une force **F** nulle. Sur le diagramme (203), on obtient un plateau de tension $V_{L2}$ aux bornes de l'inductance de réception $L_2$ ayant une amplitude $A_1$ présentée en trait continu. L'amplitude $A_1$ associée à une distance $d_1 < d_0$ est supérieure à l'amplitude A0 correpondant à la distance initiale $d_0$. Le plateau de tension $V_{L2}$ est obtenu grâce à la haute impédance d'entrée de la chaîne d'acquisition 11 connectée à l'inductance de réception $L_2$. Dans le troisième mode de réalisation, le calculateur ECU est configuré pour :

- réaliser un échantillonnage du premier signal numérique $V_{dig}$ afin d'extraire l'amplitude $A_1$ de la tension $V_{L2}$ aux bornes de l'inductance de réception $L_2$ ;

- et pour calculer l'écart entre l'amplitude $A_1$ extraite et une amplitude de référence $A_0$ prédéterminée.

L'amplitude de référence $A_0$ est mesurée préalablement dans une étape de tarage correspondant aux conditions suivantes : F=F0 (avec F0 éventuellement nulle) et $d = d_0$. L'amplitude de référence $A_0$ est ensuite stockée comme donnée numérique dans la mémoire du calculateur ECU.

Le capteur génère ainsi un signal de mesure $V_{out}$ de la variation de la distance $\Delta d$ suite à un déplacement ou la déformation du corps d'épreuve CE. Le signal de mesure $V_{out}$ correspond à une mesure de la variation de l'amplitude $\Delta A = A_1 - A_0$.

Le plateau de tension $V_{L_2}$ permet d'obtenir une pluralité de points de mesure de l'amplitude. Le calculateur est ainsi configuré pour réaliser une acquisition de plusieurs points de mesure et puis calculer une moyenne pour améliorer la résolution de la mesure.

La figure 3 illustre une vue en coupe d'un premier mode de réalisation de la partie inductive du capteur D1 selon l'invention. On rappelle que la partie inductive du capteur est constituée de l'inductance d'émission $L_1$, l'inductance de réception $L_2$ et l'élément de couplage magnétique Fe. Dans ce premier exemple, l'inductance d'émission $L_1$ et l'inductance de réception $L_2$ sont placées l'une à côté de l'autre et sont latéralement faiblement couplées magnétiquement en ayant au besoin recours à un blindage magnétique externe tel un cylindre en ferrite. Chaque inductance $L_1$ et $L_2$ est réalisée par un enroulement d'un fil conducteur autour d'un support creux distinct (S1 et S2) rempli d'air, typiquement un cylindre creux isolant non magnétique, en polymère par exemple. Les spires sont jointives, ayant un diamètre compris entre $40\mu$m et $100\mu$m. La longueur l des spires jointives cumulées de chaque fil conducteur est inférieure à 3mm pour obtenir une résistance résiduelle du bobinage inférieure à $1\Omega$. Cela permet d'améliorer le facteur de qualité de la partie inductive et ainsi améliorer la sensibilité du capteur inductif D1.

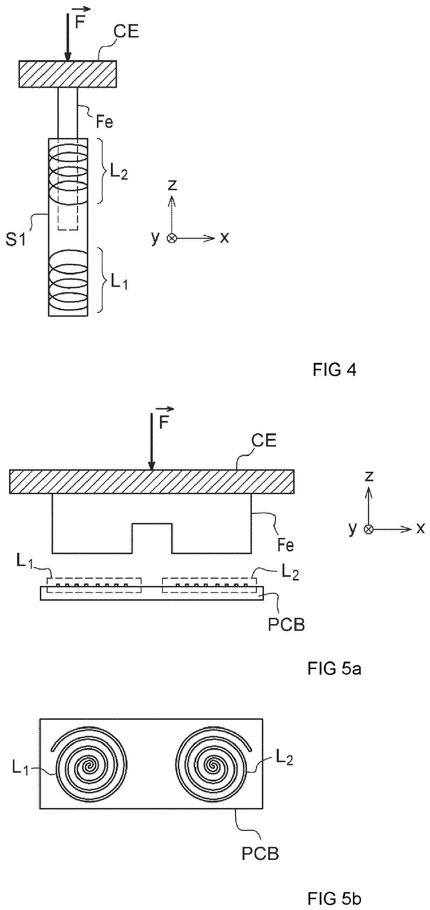

La figure 4 illustre une vue en coupe d'un deuxième mode de réalisation de la partie inductive du capteur D1 selon l'invention. Dans ce mode de réalisation, l'inductance d'émission $L_1$ est superposée sur l'inductance de réception $L_2$ selon le même axe. Il s'agit alors d'un couplage magnétique direct. Ainsi, le couplage magnétique direct entre les deux inductances est amélioré et l'inductance de réception $L_2$ contribue fortement à la définition de la résonance de la partie inductive du capteur selon l'invention. L'élément de couplage magnétique Fe est une tige en le matériau ferromagnétique décrit précédemment. Chaque inductance $L_1$ et $L_2$ est réalisée par un enroulement d'un fil conducteur émaillé autour d'un support creux commun S1 rempli d'air, typiquement un cylindre creux isolant non magnétique, en polymère par exemple. La tige Fe est insérée dans le support creux S1. Avantageusement, la tige Fe est insérée du côté de l'inductance de réception $L_2$. Cela permet d'augmenter d'abord principalement l'inductance de réception $L_2$ sans augmenter l'inductance d'émission $L_1$, et ainsi permettre de créer un transformateur élévateur de tension tout en commençant à abaisser la fréquence de résonance par inductance mutuelle. Puis lorsque la tige atteint le coeur de $L_1$, l'inductance mutuelle est la plus forte et la fréquence minimale. La tige Fe est mécaniquement solidaire au corps d'épreuve CE. La translation de la tige Fe dans le support creux S1 modifie donc le couplage magnétique entre l'inductance d'émission $L_1$ et l'inductance de réception $L_2$ Cela induit une modification de la fréquence et de l'amplitude du signal de sortie $V_{out}$ comme décrit précédemment.

La figure 5a illustre une vue en coupe d'un troisième mode de réalisation de la partie inductive du capteur D1 selon l'invention. La figure 5b illustre une vue de dessus partielle du troisième mode de réalisation de la partie inductive du capteur D1 selon l'invention. L'inductance d'émission $L_1$ et l'inductance de réception $L_2$ sont coplanaires. Les deux inductances sont disposées à plat avec un enroulement en escargot l'une à côté de l'autre sur la même face d'un circuit imprimé PCB. Les enroulements sont réalisés par des pistes métalliques déposées sur le circuit imprimé PCB.

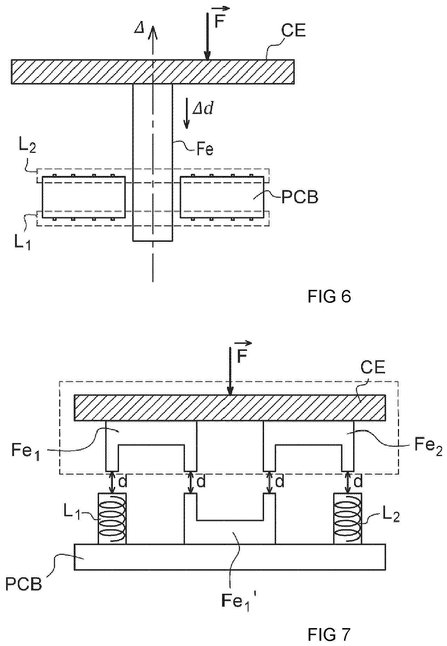

La figure 6 illustre une vue en coupe d'un troisième mode de réalisation de la partie inductive du capteur D1 selon l'invention. L'inductance d'émission $L_1$ est réalisée par un enroulement d'une piste métallique sur la face supérieure d'un circuit imprimé PCB. L'inductance de réception $L_2$ est réalisée par un enroulement d'une piste métallique sur la face inférieure du circuit imprimé PCB. L'inductance d'émission $L_1$ et L'inductance de réception $L_2$ ont le même axe $\Delta$. Le circuit imprimé PCB comprend un trou traversant de la face supérieure vers la face inférieure selon l'axe $\Delta$ des deux inductances. L'élément de couplage magnétique Fe est une tige en le matériau ferromagnétique décrit précédemment. La tige Fe est insérée dans le trou traversant, de préférence en commençant du côté de l'inductance de réception $L_2$. La tige Fe est mécaniquement solidaire au corps d'épreuve CE. En l'absence de déformation du corps d'épreuve, l'extrémité de la tige s'arrête de préférence à mi-chemin de l'épaisseur du circuit imprimé PCB. La translation de la tige Fe dans le trou traversant modifie le couplage magnétique entre l'inductance d'émission $L_1$ et l'inductance de réception $L_2$. Cela induit une modification de la fréquence et/ou de l'amplitude du signal de sortie $V_{out}$ comme décrit précédemment.

La figure 7 illustre une vue en coupe d'un cinquième mode de réalisation de la partie inductive du capteur D1 selon l'invention. L'inductance d'émission $L_1$ et l'inductance de réception $L_2$ sont disposées l'une à côté de l'autre. La partie mobile 2 comprend N (ici N=2) éléments de couplage magnétique $Fe_1$ $Fe_2$ mécaniquement solidaires au corps d'épreuve CE avec N un entier strictement supérieur à 1. Les éléments de couplage magnétique $Fe_1$, $Fe_2$ sont alignés selon une rangée. Le premier élément de couplage magnétique $Fe_1$ est couplé avec l'inductance d'émission $L_1$. Le deuxième élément de couplage magnétique $Fe_2$ est couplé avec l'inductance de réception $L_2$.

D'autre part, la partie fixe 1 comprend N-1 (dans le cas illustré un seul) éléments de couplage magnétique intermédiaires $Fe_1$' disposés entre l'inductance d'émission $L_1$ et l'inductance de réception $L_2$. Chaque élément de couplage magnétique intermédiaire $Fe_i$' de rang i est destiné à coupler magnétiquement l'élément de couplage magnétique $Fe_i$ de même rang i dans la rangée de la partie mobile 2 à l'élément de couplage magnétique $Fe_{i+1}$ suivant. On réalise ainsi un couplage magnétique en cascade.

Les éléments de couplage magnétique $Fe_i$ de la partie mobile 2 sont séparés d'une distance d des éléments de couplage magnétique $Fe_i$' de la partie fixe 1. Ladite distance est égale à la distance de séparation entre éléments de couplage magnétique $Fe_i$ de la partie mobile 2 et les inductances $L_1$ et $L_2$. Cela permet d'augmenter la dépendance de la fréquence et/ou de l'amplitude selon la variation de ladite distance de séparation d. Plus particulièrement, on obtient une dépendance en $d^N$ ce qui améliore considérablement la sensibilité du capteur.

En pratique, les pertes élevées dans les éléments de couplage magnétique associées à cette configuration conduisent à ce que l'influence de l'inductance de réception $L_2$ sur la fréquence de résonance ou l'amplitude est négligeable par rapport à l'effet cumulé de la perméabilité magnétique des éléments de couplage en fonction de la distance d sur la perméabilité magnétique équivalente du circuit. On peut atteindre ainsi une configuration où l'introduction d'une isolation magnétique latérale entre les inductances $L_1$ et $L_2$ est forte par blindage magnétique. Cela implique que la contribution du couplage magnétique direct latéral entre les inductances $L_1$ et $L_2$ est négligeable devant l'effet des éléments de couplage magnétique $Fe_i$ et $Fe_i'$. Il en résulte que la contribution de l'inductance de réception $L_2$ aux variations de la fréquence de résonance ou amplitude du signal de sortie $V_{out}$ soit négligeable, surtout si le nombre de spires de l'inductance de réception $L_2$ est petit, par exemple 2 à 5 fois plus petit, que le nombre de spire de l'inductance d'émission $L_1$.

Inversement, si le nombre de spire de l'inductance de réception $L_2$ est grand devant celui de l'inductance d'émission $L_1$, par exemple 2 à 5 fois plus grand, et si l'isolation magnétique latérale directe entre $L_1$ et $L_2$ est grande (par blindage), alors la contribution de l'inductance de réception $L_2$ aux variations de la fréquence de résonance ou à l'amplitude du signal de sortie $V_{out}$ peut devenir importante pour de petites variations de d. Cela induit une augmentation significative de la plage de variation de la fréquence et/ou de l'amplitude du signal de sortie $V_{out}$.

## Revendications

1. Capteur inductif (D1) comprenant une partie fixe (1) et une partie mobile (2) la partie mobile (2) comprenant :

   - un corps d'épreuve (CE) mobile ou déformable, selon une première direction (Z),
   - et un élément de couplage magnétique (Fe) mécaniquement solidaire du corps d'épreuve (CE) ;

   la partie fixe (1) comprenant :

   - un générateur de tension (G1) configuré pour générer un signal d'excitation ($V_{in}$);
   - un transformateur à bobines (12) comprenant une inductance d'émission ($L_1$) montée en parallèle avec le générateur (G1) et une inductance de réception ($L_2$) ; l'axe de l'inductance d'émission ($L_1$) et l'axe de l'inductance de réception ($L_2$) étant orientés selon la première direction (Z) ; l'élément de couplage magnétique (Fe) étant placé par rapport au transformateur à bobines (12) de manière à coupler magnétiquement l'inductance d'émission ($L_1$) et l'inductance de réception ($L_2$) ; l'élément de couplage magnétique (Fe) étant séparé d'une extrémité de l'inductance d'émission ($L_1$) par une distance (d) de séparation;
   - une chaîne d'acquisition (11) connectée à l'inductance de réception ($L_2$) et configurée pour générer un signal de mesure ($V_{out}$) de la variation de la distance (d) suite à un déplacement ou à la déformation du corps d'épreuve (CE) ; le signal de mesure ($V_{out}$) correspondant à une mesure de la variation de la fréquence ou de l'amplitude de la tension aux bornes de l'inductance de réception ($L_2$).

2. Capteur inductif (D1) selon la revendication 1 dans lequel la chaîne d'acquisition (11) comprend un convertisseur analogique-numérique (DAC) pour convertir la tension aux bornes de l'inductance de réception ($L_2$) en un premier signal numérique ($V_{dig}$).

3. Capteur inductif (D1) selon la revendication 2 dans lequel la chaîne d'acquisition (11) comprend un calculateur (ECU) configuré pour :

   - extraire la fréquence de résonance ($f_1$) de la tension aux bornes de l'inductance de réception ($L_2$) à partir du premier signal numérique ($V_{dig}$).
   - calculer l'écart entre la fréquence de résonance ($f_1$) extraite et une fréquence de référence ($f_0$) prédéterminée.

4. Capteur inductif (D1) selon l'une quelconque des revendications 2 ou 3 dans lequel le signal d'excitation ($V_{in}$) est une impulsion rectangulaire.

5. Capteur inductif (D1) selon l'une quelconque des revendications 2 à 4 dans lequel la partie fixe (1) comprend en outre un élément capacitif (C1) et un élément résistif (Rs) montés en série avec l'inductance d'émission ($L_1$) de manière à réaliser un circuit RLC alimenté par le générateur de tension (G1).

**6.** Capteur inductif (D1) selon la revendication 2 dans lequel la chaîne d'acquisition (11) comprend un calculateur (ECU) configuré pour :

    - réaliser un échantillonnage du premier signal numérique ($V_{dig}$) afin d'extraire l'amplitude ($A_1$) de la tension aux bornes de l'inductance de réception ($L_2$) ;
    - calculer l'écart entre l'amplitude ($A_1$) extraite et une amplitude de référence ($A_0$) prédéterminée.

**7.** Capteur inductif (D1) selon la revendication 6 dans lequel le signal d'excitation ($V_{in}$) est une rampe de tension.

**8.** Capteur inductif (D1) selon l'une quelconque des revendications 2 à 7 dans lequel la chaîne d'acquisition (11) comprend un circuit amplificateur (AMP) monté en amont du convertisseur analogique-numérique (DAC) pour amplifier la tension aux bornes de l'inductance de réception ($L_2$).

**9.** Capteur inductif (D1) selon l'une quelconque des revendications précédentes dans lequel l'élément de couplage magnétique (Fe) est un objet en un matériau ferrite sous forme de $\pi$ ou sous forme de demi-tore ou sous forme de tige ou sous forme de feuille.

**10.** Capteur inductif (D1) selon la revendication 9 dans lequel le matériau ferrite est choisi tel que la sensibilité thermique de la perméabilité magnétique relative ($\mu r$) dudit matériau est inférieure à 1%/°C.

**11.** Capteur inductif (D1) selon l'une quelconque des revendications précédentes dans lequel l'inductance d'émission ($L_1$) et l'inductance de réception ($L_2$) sont réalisées par des pistes métalliques coplanaires déposées sur un circuit imprimé (PCB).

**12.** Capteur inductif (D1) selon l'une quelconque des revendications précédentes dans lequel chacune de l'inductance d'émission ($L_1$) et de l'inductance de réception ($L_2$) est réalisée par une bobine enroulée autour d'une tige solide.

**13.** Capteur inductif (D1) selon l'une quelconque des revendications précédentes dans lequel l'inductance d'émission ($L_1$) est disposée à côté de l'inductance de réception ($L_2$) ou superposée sur l'inductance de réception ($L_2$).

**14.** Capteur inductif (D1) selon l'une quelconque des revendications précédentes dans lequel la partie mobile (2) comprend N éléments de couplage magnétique ($Fe_1$, $Fe_2$) mécaniquement solidaires au corps d'épreuve (CE) alignés selon une rangée avec N un entier strictement supérieur à 1 ; et dans lequel la partie fixe (1) comprend N-1 éléments de couplage magnétique intermédiaires disposés entre l'inductance d'émission ($L_1$) et l'inductance de réception ($L_2$).

**15.** Appareil de mesure de poids ou de pression comprenant un capteur inductif (D1) selon l'une quelconque des revendications précédentes.

FIG 1a

FIG 1b

FIG 1c

FIG 2a

FIG 2b

FIG 3

FIG 4

FIG 5a

FIG 5b

FIG 6

FIG 7

Europäisches
Patentamt

European
Patent Office

Office européen
des brevets

# RAPPORT DE RECHERCHE EUROPEENNE

Numéro de la demande

EP 24 16 5906

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2008/047001 A2 (NANOTEC SOLUTION) 24 avril 2008 (2008-04-24) | 1,2,4-6, 8-11,13, 15 | INV. G01B7/02 G01D5/20 G01G7/02 |
| A | * abrégé; figures * <br> * pages 9,16-23 * <br> * pages 44,48,50 * | 7 | |
| X | WO 2014/005769 A2 (BOSCH GMBH ROBERT) 9 janvier 2014 (2014-01-09) <br> * abrégé; figures * <br> * pages 1,14,19 * | 1-6, 8-11,13 | |
| X | US 2018/259411 A1 (SCHANZ CHRISTOPH) 13 septembre 2018 (2018-09-13) <br><br> * abrégé; figures * <br> * alinéas [0071] - [0081] * | 1,2,5,6, 8,9, 11-15 | |

### DOMAINES TECHNIQUES RECHERCHES (IPC)

G01D
G01L
G01B
H03K
G01G
H01F

Le présent rapport a été établi pour toutes les revendications

| Lieu de la recherche | Date d'achèvement de la recherche | Examinateur |
|---|---|---|
| Munich | 19 juillet 2024 | Barthélemy, Matthieu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

**EP 4 439 001 A1**

## ANNEXE AU RAPPORT DE RECHERCHE EUROPEENNE
## RELATIF A LA DEMANDE DE BREVET EUROPEEN NO.

EP 24 16 5906

19-07-2024

| Document brevet cité au rapport de recherche | Date de publication | Membre(s) de la famille de brevet(s) | Date de publication |
|---|---|---|---|
| WO 2008047001 A2 | 24-04-2008 | FR 2907211 A1<br>WO 2008047001 A2 | 18-04-2008<br>24-04-2008 |
| WO 2014005769 A2 | 09-01-2014 | CN 104583743 A<br>DE 102012211416 A1<br>EP 2867639 A2<br>WO 2014005769 A2 | 29-04-2015<br>23-01-2014<br>06-05-2015<br>09-01-2014 |
| US 2018259411 A1 | 13-09-2018 | DE 102017104547 A1<br>EP 3370051 A2<br>US 2018259411 A1 | 06-09-2018<br>05-09-2018<br>13-09-2018 |

EPO FORM P0460

**EP 4 439 001 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 9819133 A
- DE 10048435 A1